# EUROPEAN PATENT APPLICATION

(11) **EP 3 118 262 A1**
(43) Date of publication of application: **18.01.2017**
(21) Application number: 15761741.6
(22) Date of filing: 12.03.2015
(51) Int. Cl.: C08L 101/00, B65D 65/40, B65D 81/26, C08K 5/098, C08K 5/20

(54) **OXYGEN ABSORPTIVE RESIN COMPOSITION**

(30) Priority: 14.03.2014 JP 2014051035
(71) Applicant: Toyo Seikan Group Holdings, Ltd., Shinagawa-ku Tokyo 141-8627 (JP)
(72) Inventor: SAWA, Yoshiki, Yokohama-shi Kanagawa 240-0062 (JP); HIRAYAMA, Yukiko, Yokohama-shi Kanagawa 240-0062 (JP); YAMADA, Toshiki, Yokohama-shi Kanagawa 240-0062 (JP)
(74) Representative: Raynor, Stuart Andrew
(86) International application number: PCT/JP2015/057307
(87) International publication number: WO 2015/137450

(57) **Abstract**

An oxygen-absorbing resin composition containing (A) a base material which comprises a thermoplastic resin; (B) a bisimide compound derived from a tetrahydrophthalic anhydride and an aliphatic diamine; and (C) a transition metal catalyst; wherein the bisimide compound (B) is contained in amounts of 0.1 to 10.0% by weight, and the transition metal catalyst (C) is contained in amounts of 10 to 350 ppm calculated as metal. Despite of containing an organic oxygen absorber, the oxygen-absorbing resin composition of the invention is free from the problem of yellowing caused by the absorption of oxygen.

## Description

### Technical Field:

This invention relates to an oxygen-absorbing composition containing, as an oxygen absorber, a compound which by itself has oxygen-absorbing property.

### Background Art:

Thermoplastic resins or polyester resins, such as polyethylene terephthalate (PET) and the like, excel in such properties as formability, transparency, mechanical strength and resistance against chemicals and, further, have relatively high barrier properties against gases such as oxygen and the like. Therefore, the polyester resins have been used in a variety of fields as packaging materials such as films, sheets and bottles. To improve the gas-barrier property of such packaging materials, further, there has been known a multi-layer structure which includes, as an intermediate layer, a layer of a gas-barrier resin such as a saponified product of an ethylene-vinyl acetate copolymer or a polyamide having excellent gas-barrier property between an inner layer and an outer layer of a polyester resin via suitable adhesive resin layers.

From the standpoint of saving resources and decreasing the weight of the packaging containers such as polyester bottles that have been placed in the market, it has been desired to further decrease the thickness of the body portions, and the like. To meet the above requirement, further, it becomes necessary to suppress a decrease in the barrier property against the gases such as oxygen and the like caused by a reduction in the thickness, as a matter of course. In an embodiment that uses the gas-barrier resin, in this case, the container must be formed in a multiplicity of layers to shut off the permeation of gases making it difficult to decrease the thickness of the container to a sufficient degree.

Oxygen-barrier property can also be improved by using an inorganic oxygen absorber such as iron powder. The oxygen absorber by itself undergoes oxidation and absorbs oxygen; i.e. , exhibits barrier property to shut off the permeation of oxygen upon absorbing oxygen. However, the inorganic oxygen absorber causes the resins to be colored and, therefore, cannot be used in the field of packaging where transparency is required. In the field of packaging, therefore, it is a general practice to use an organic oxygen absorber that does not cause resins to be colored.

A patent document 1, for example, proposes an oxygen-absorbing resin composition containing an organic oxygen absorber (oxidizing organic component) such as unmodified polybutadiene or maleic anhydride-modified polybutadiene.

Further, a patent document 2 proposes an oxygen-trapping composition containing a compound having an unsaturated alicyclic structure (cyclohexene structure) as an organic oxygen absorber.

Further, patent documents 3 and 4 filed by the present applicant are proposing oxygen-absorbing resin compositions containing, as an organic oxygen absorber, an acid anhydride represented by the following formula, 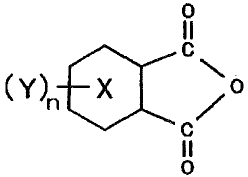 wherein,
ring X is an aliphatic ring having an unsaturated bond,
n is a number of zero or 1, and
Y is an alkyl group,
a derivative derived from the above acid anhydride, such as ester, amide, imide or dicarboxylic acid; or a polymer containing a constituent unit derived from the above acid anhydride.

### Prior Art Documents:

### Patent Documents:

Patent document 1: JP-A-2004-161796
Patent document 2: JP-T-2010-523799
Patent document 3: WO2012/102086
Patent document 4: WO2013/099921

### Outline of the Invention:

### Problems that the Invention is to Solve:

Unlike the inorganic oxygen absorbers, the above-mentioned organic oxygen absorbers do not cause inconvenience such as coloring the resin that is used as a binder. According to the study by the present inventors, however, they still have a problem of yellowing as they absorb oxygen. Though the degree of yellowing is not so serious, it cannot be neglected in the field of packaging containers where transparency is required, and improvements have been desired.

It is, therefore, an object of the present invention to provide an oxygen-absorbing resin composition which contains an organic oxygen absorber and effectively solves the problem of yellowing caused by the absorption of oxygen.

Another object of the present invention is to provide a packaging container having a layer that contains the above oxygen-absorbing resin composition.

### Means for Solving the Problems:

In studying the organic oxygen absorbers, the present inventors have discovered the new fact that by selecting, as the organic oxygen absorber, a bisimide compound obtained by reacting an anhydride having a tetrahydrophthalic anhydride structure with an aliphatic diamine, and by using the organic oxygen absorber in combination with a small amount of transition metal catalyst, it is made possible to effectively suppress the yellowing caused by the absorption of oxygen without impairing the oxygen-absorbing capability, and have thus completed the invention.

Namely, according to the present invention, there is provided an oxygen-absorbing resin composition containing:
(A) a base material which comprises a thermoplastic resin;
(B) a bisimide compound derived from an acid anhydride represented by the following formula (1): 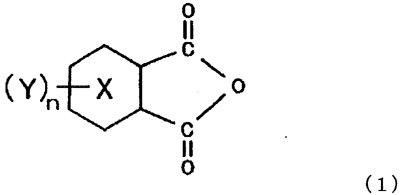 wherein, a ring X is an aliphatic ring having an unsaturated bond, n is a number of substituents Y bonded to the ring X and is an integer of 0 or 1, and Y is an alkyl group,
   and an aliphatic diamine; and
(C) a transition metal catalyst;
   wherein the bisimide compound (B) is contained in amounts of 0.1 to 10.0% by weight, and the transition metal catalyst (C) is contained in amounts of 10 to 350 ppm calculated as metal.

In the oxygen-absorbing resin composition of the present invention, it is desired that:
(1) The bisimide compound (B) is contained in amounts of 1.0 to 5.0% by weight, and the content of the transition metal catalyst (C) is contained in amounts of 20 to 100 ppm calculated as metal; and
(2) The aliphatic diamine has a non-cyclic structure.

According to the present invention, further, there is provided a packaging container having a layer that contains the above oxygen-absorbing resin composition.

### Effects of the Invention:

The oxygen-absorbing resin composition of the present invention uses an organic oxygen absorber {i.e., component (B)} as the oxygen absorber and, therefore, effectively alleviates the problem of coloring. As the organic oxygen absorber, further, the invention uses a specific bisimide compound derived from the acid anhydride of the above formula (1) and the aliphatic diamine, and effectively suppresses the problem of yellowing caused by the absorption of oxygen.

As demonstrated in Examples and Comparative Examples appearing later, for example, even if the acid anhydride of the formula (1) is used, a bottle made of the resin composition blended with the bisimide obtained by the reaction thereof with the aromatic diamine permits the b*-value to greatly increase in the L*a*b* color space with an increase in the amount of oxygen absorption, and it is recognized that the the degree of yellowness increases (Comparative Example 3). On the other hand, if the bottle is formed by using the resin composition of the present invention blended with the bisimide obtained by reacting the acid anhydride of the formula (1) with the aliphatic diamine, the b*-value varies very small despite oxygen is absorbed. It is, therefore, learned that yellowing is effectively suppressed even after oxygen is absorbed.

In the present invention, further, the bisimide used as the organic oxygen absorber exhibits a very large heat resistance. Therefore, even if it is melt-kneaded together with the polyester resin such as polyethylene terephthalate (PET) that must be melt-kneaded at a high temperature, there is no probability of impairing oxygen-absorbing capability.

The oxygen-absorbing resin composition of the present invention containing the bisimide as the organic oxygen absorber excels in such properties as non-colorability, yellowing resistance and heat resistance, in addition to imparting oxygen-barrier property as it absorbs oxygen. Accordingly, the oxygen-absorbing resin composition of the invention is useful in the field of packaging containers where transparency is required, and is, further, very useful for stretch-molded heat-resistant containers that have improved heat resistance and strength as a result of having been heat-set.

### Modes for Carrying Out the Invention:

The oxygen-absorbing resin composition of the present invention contains, as essential components, (A) a base material resin, (B) an organic oxygen absorber and (C) a transition metal catalyst and, further, contains, as required, various blending agents that have been known per se. within ranges in which they do not impair the objects of the present invention.

### (A) Base material resin;

In the oxygen-absorbing resin composition of the present invention, the base material resin serves as a matrix for dispersing (B) the organic oxygen absorber and (C) the transition metal catalyst that will be described later. As the base material resin, there is used a thermoplastic resin from the viewpoint of formability.

As the thermoplastic base material resin, there can be used any thermoplastic resin so far as it is capable of being formed, such as those described below.

Olefin resins such as low-density polyethylene, high-density polyethylene, polypropylene, poly 1-butene, poly 4-methyl-1-pentene and random or block copolymers of α-olefins such as ethylene, propylene, 1-butene or 4-methyl-1-pentene, and cyclic olefin copolymer;
Ethylene-vinyl copolymer such as ethylene-vinyl acetate copolymer, ethylene-vinyl alcohol copolymer and ethylene-vinyl chloride copolymer;
Styrene resins such as polystyrene,
acrylonitrile-styrene copolymer, ABS, and α -methylstyrene-styrene copolymer;
Vinyl resins such as polyvinyl chloride, polyvinylidene chloride, vinyl chloride-vinylidene chloride copolymer, poly(methyl acrylate) and poly(methyl methacrylate);
Polyamide resins such as nylon 6, nylon 6-6, nylon 6/6-6 copolymer, polymetaxylileneadipamide, nylon 6-10, nylon 11, nylon 12 and nylon 13;
Polyester resins such as polyethylene terephthalate (PET), polybutylene terephthalate, polyethylene naphtalate and copolymerized polyesters thereof;
Polycarbonate resins;
Polyphenylene oxide resins; and
Biodegradable resins such as polylactic acid, etc.

It is also allowable to use a blend of these thermoplastic resins as a base material resin, as a matter of course, so far as the formability is not impaired.

The oxygen-absorbing composition of the present invention exhibits oxygen-barrier property as it absorbs oxygen and, besides, suppresses the yellowing despite of having absorbed oxygen. Among the above-mentioned thermoplastic resins, therefore, it is desired to use, as the base material resin, a resin such as olefin resin or polyester resin that has heretofore been preferably used as a packaging material. Specifically, (B) the bisimide compound (organic oxygen absorber) that will be described later exhibits a large heat resistance. Therefore, the advantage of the present invention can be utilized to a maximum degree when the polyester resin is used as the base material resin, the polyester resin having the highest glass transition temperature (Tg) among the above-mentioned thermoplastic resins and capable of being kneaded and formed at a high temperature.

The polyester resin should have a molecular weight which is at least large enough for forming a film and is, desirably, a polyester resin having an intrinsic viscosity (I.V.) in a range of 0.6 to 1.40 dl/g and, specifically, 0.63 to 1.30 dl/g. Among them, there can be used, particularly, a thermoplastic polyester that can be biaxially stretch-blow molded and crystallized, like polyethylene terephthalate (PET), polybutylene terephthalate, and polyethylene naphthalate, and a blend of these polyesters and a polycarbonate, an arylate resin and the like.

The present invention uses, particularly preferably, a PET polyester of the packaging grade of which not less than 60 mol% and, preferably, not less than 80 mol% of the ester recurring unit is an ethylene terephthalate unit. The PET polyester of the packaging grade has no unsaturated group and has a glass transition point (Tg) of as high as 50 to 90°C and, specifically, 55 to 80°C and a melting point (Tm) in a range of 200 to 275°C.

The PET polyester is, most desirably, a homopolyethylene terephthalate. It is, however, also allowable to desirably use a copolymerized polyester containing the ethylene terephthalate unit in an amount within the above-mentioned range.

In the copolymerized polyester, as the dibasic acid other than the terephthalic acid, there can be exemplified aromatic dicarboxylic acids such as isophthalic acid, phthalic acid and naphthalenedicarboxylic acid; alicyclic
dicarboxylic acids such as cyclohexanedicarboxylic acid, etc.; and aliphatic dicarboxylic acids such as succinic acid, adipic acid, sebacic acid and dodecanedioic acid, which may be used in one kind or in a combination of two or more kinds.

As the diol component other than the ethylene glycol, there can be exemplified propylene glycol, 1,4-butanediol, diethyene glycol, 1, 6-hexylene glycol, cyclohexanedimethanol, ethylene oxide adduct of bispheol A, etc., which may be used in one kind or in two or more kinds.

In the present invention, further, among the above-mentioned thermoplastic resins, the so-called gas-barrier resin, too, can be favorably used as the base material resin. Namely, the gas-barrier resin has excellent oxygen shut-off property. By using the gas-barrier resin as the base material resin, therefore, it is allowed to extend the effective life of the oxygen absorber and to sustain excellent oxygen-barrier property over extended periods of time. It is, further, allowed to improve barrier property against gases (e.g., water vapor, carbonic acid gas) in addition to oxygen.

As the gas-barrier resin, there can be exemplified polyamide resins such as nylon 6, nylon 6·6, nylon 6/6·6 copolymer, polymetaxylilenediadipamide (MXD6), nylon 6·10, nylon 11, nylon 12 and nylon 13. Among these polyamides, a polymetaxylilenediadipamide having a terminal amino group in an amount of not less than 40 eq/10⁶ g and, specifically, not less than 50 eq/10⁶ g, has a large resistance against the deterioration by oxidation and is desired.

As the gas-barrier resin other than the polyamide resin, further, an ethylene-vinyl alcohol copolymer is a representative example. For instance, there can be preferably used a saponified product of a copolymer obtained by saponifying an ethylene-vinyl acetate copolymer having an ethylene content of 20 to 60 mol% and, specifically, 25 to 50 mol% such that the degree of saponification is not less than 96% and, specifically, not less than 99 mol%.

The above gas-barrier resin should have a molecular weight large enough for forming a film.

### (B) Organic oxygen absorber;

As the organic oxygen absorber (B) for absorbing oxygen, the present invention uses a bisimide compound derived from an acid anhydride represented by the following formula (1): 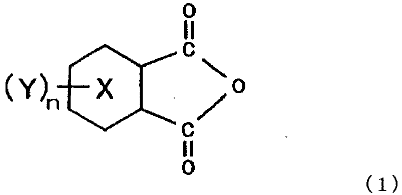 wherein a ring X is an aliphatic ring having an unsaturated bond, n is a number of the substituents Y bonded to the ring X and is an integer of 0 or 1, and Y is an alkyl group,
and an aliphatic diamine. In the bisimide compound, an unsaturated bond in the unsaturated ring in a molecule is easily oxidized to thereby absorb oxygen, i.e., to exhibit oxygen-absorbing capability. The unsaturated bond in, for example, an aromatic ring is not of a nature to be oxidized.

The above bisimide compound is of the organic type, does not cause the resin to be colored, can be favorably used for the applications where transparency is required, has favorable heat resistance, and does not lose its excellent properties even when a polyester resin such as PET having a high process temperature is used as the base material resin.

Further, in case the unsaturated bond is oxidized in the unsaturated alicyclic structure in the bisimide compound, the ring is simply cleaved without, however, by-producing any low-molecular decomposed product (e.g., ketone or aldehyde) by oxidation. Therefore, even when the bisimide compound having such an unsaturated alicyclic structure is used as an oxygen-absorbing component, no offensive odor is generated despite oxygen is absorbed. Therefore, when a packaging container is formed by using the bisimide compound (B) as a packaging material, there is no decrease in the flavor of the content in the container.

When, for example, a container is formed by using the oxygen-absorbing resin composition, the layer of this composition can be arranged on the side that comes in contact with the content in the container. Moreover, the container can be formed using the layer of this composition only (i.e., single-layer structure). Specifically, when the container is formed in the single-layer structure, the layer exhibits favorable oxygen-barrier property since it excellently absorbs oxygen. Therefore, the thickness of the container wall can be decreased offering a great advantage from the standpoint of reducing the weight of the container and saving resources.

Besides, in the present invention, the bisimide compound is used as the organic oxygen absorber (B), and the transition metal catalyst (C) that will be described later is also used in a small amount in combination to effectively suppress the problem of yellowing caused by the absorption of oxygen. This is the greatest advantage of the present invention.

The bisimide compound is obtained by reacting the unsaturated aliphatic ring-containing acid anhydride of the formula (1) with the aliphatic diamine, and heat-treating the obtained amide.

The ring X (unsaturated aliphatic ring having an unsaturated bond) possessed by the acid anhydride of the formula (1) is, preferably, a cyclohexene ring. However, preferred examples also include a bicyclic ring that has a bridging group (e.g., methylene group, ethylene group, etc.) in the cyclohexene ring, and a ring having a polycyclic structure in which an aliphatic group is, further, bonded to the bicyclic ring. As the polycyclic ring, there can be exemplified those having a bicyclic ring structure represented by the following formula (1a); 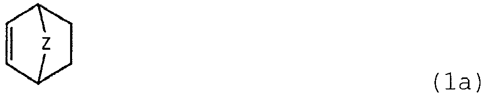 wherein Z is a methylene group or an ethylene group.

In the bicyclic ring, the carbon atom in the ring to which the bridge group Z is bonded is a tertiary carbon atom which can be easily oxidized. Therefore, the oxygen-absorbing capability due to oxidation is, further, improved.

Described below are concrete examples of the polycyclic rings though not limited thereto only.

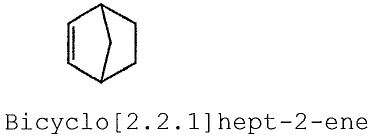

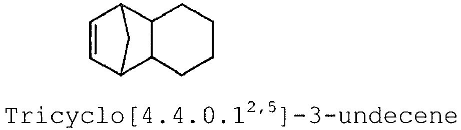

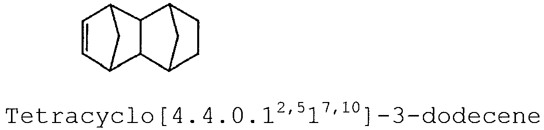

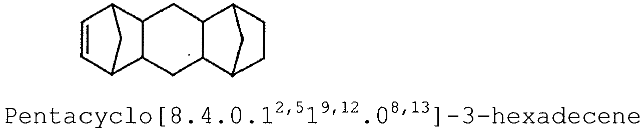

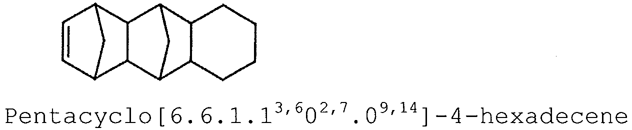

There is no particular limitation on the positional relationship between the unsaturated bond in the ring X and the acid anhydride group bonded to the ring X unless the property of the unsaturated bond for being oxidized is not basically impaired. By taking the property for being synthesized and the stability of the compound into consideration, however, it is desired that the following positional relationships are maintained.

When the ring X is a cyclohexene ring;
The carbon atoms are bonded to the acid anhydride group at the first and second positions, and the unsaturated bond is at the third or fourth position.

When the ring X is the bicyclo[2.2.1]hept-2-ene;
The carbon atoms are bonded to the acid anhydride group at the fifth and sixth positions relative to the unsaturated bond at the second position.

When the ring X is the tricyclo[4.4.0.1^{2,5}]-3-undecene;
The carbon atoms are bonded to the acid anhydride group at the eighth and ninth positions relative to the unsaturated bond at the third position.

When the ring X is the tetracyclo[4.4.0.1^{2,5}1^{7,10}]-3-dodecene;
The carbon atoms are bonded to the acid anhydride group at the eighth and ninth positions relative to the unsaturated bond at the third position.

When the ring X is a pentacyclo[8.4.0.1^{2,5}1^{9,12}.0^{8,13}]-3-hexadecene;
The carbon atoms are bonded to the acid anhydride group at the tenth and eleventh positions relative to the unsaturated bond at the third position.

When the ring X is the pentacyclo[6.6.1.1^{3,6}0^{2,7}.0^{9,14}]-4-hexadecene;
The carbon atoms are bonded to the acid anhydride group at the eleventh and twelfth positions relative to the unsaturated bond at the fourth position.

In the above formula (1), Y represents a substituent bonded to the aliphatic ring X. Concretely, Y is an alkyl group. Though not specifically limited, the alkyl group is, usually, a lower alkyl group having not more than 3 carbon atoms from the standpoint of synthesis and property of being oxidized and, particularly desirably, is a methyl group.

Though there is no particular limitation on the number n of the substituents Y (alkyl groups), it is better to avoid, at least, the structure in which the substituents Y are bonded to both of the two carbon atoms that are forming the unsaturated bond possessed by the ring X. This is because if the substituents Y (alkyl groups) are bonded to both of these two carbon atoms, then the unsaturated bond loses the property for being oxidized. Namely, in the present invention, the number n of the substituents Y (alkyl groups) may be 2 or larger, or may be zero, as a matter of course unless the substituents Y are bonded to both of the above two carbon atoms.

In the present invention, it is desired that the number n of the substituents Y (alkyl groups) is zero or 1 particularly from the standpoint of synthesis. If the number n is 1, it is desired that the substituent Y (alkyl group) is bonded to either the third position or the fourth position provided the ring X is, for example, a cyclohexene ring, and is bonded to the third position provided the ring X is the bicyclo[2.2.1]hept-2-ene.

The acid anhydride of the above formula (1) is synthesized by, for example, the Diels-Alder reaction of maleic acid anhydride with the diene.

In the present invention, the most preferred examples of the acid anhydride of the above formula (1) include a 3-methyl-Δ⁴-tetrahydrophthalic anhydride presented by the following formula (2) and a 4-methyl-Δ³-tetrahydrophthalic anhydride presented by the following formula (3).

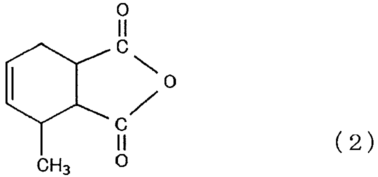

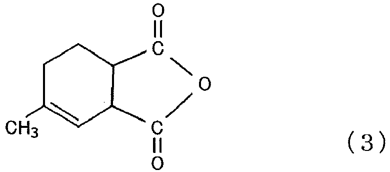

In the present invention, the bisimide compound (B) used as the organic oxygen absorber is obtained by heat-treating an amide that is formed by reacting the above acid anhydride with an aliphatic diamine. The amide which is the intermediate product and the bisimide which is the final product are expressed by the following formulas.

Amide which is the intermediate product;

HOOC-X-CONH-R-CONH-X-COOH

wherein,
X is an unsaturated aliphatic ring possessed by the acid anhydride of the formula (1), and R is an aliphatic group derived from the diamine used for the reaction.

Bisamide which is the final product;

X-(CO)₂-N-R-N-(CO)₂-X

wherein, X and R are as defined above.

In the present invention, it is important that the diamine to be reacted with the acid anhydride is the one of the aliphatic type. With the bisamide compound obtained by using, for example, an aromatic diamine such as phenylenediamine, however, it is not possible to avoid the yellowing caused by the absorption of oxygen as also demonstrated in Examples and Comparative Examples appearing later.

There is no specific limitation on the aliphatic diamine that is to be reacted with the acid anhydride provided it is capable of reacting with the acid anhydride. The divalent aliphatic group between the amino groups may be any one of the straight chain group, branched chain group or cyclic hydrocarbon group. From the standpoint of highly preventing the yellowing, however, it is desired to use an alkylenediamine which is a non-cyclic (i.e., straight chain or branched chain) alkylene group, such as methylenediamine, ethylenediamine or propylenediamine.

The acid anhydride and the aliphatic diamine may, respectively, be those that are selected from a plurality of kinds thereof, and may be put to the reaction. In this case, the obtained bisimide compound assumes an asymmetrical structure.

The amount of the organic oxygen absorber (B), i.e., the bisimide compound to be added to the thermoplastic base resin (A) is in a range of 0.1 to 10.0% by weight and, preferably, 1.0 to 5.0% by weight in the resin composition.

If the amount thereof is smaller than the above range, the oxygen-absorbing capability becomes unsatisfactory. If the amount thereof is larger than the above range, on the other hand, the tendency to yellow becomes conspicuously as a result of absorbing oxygen.

### (C) Transition metal catalyst;

In the present invention, the transition metal catalyst is used for accelerating the oxidation of the bisimide compound (B) and to improve its oxygen absorbing capability. The transition metal catalyst is used all the time in combination with the organic oxygen absorber.

Representative examples of the transition metal used for the transition metal catalyst include iron, cobalt, nickel, copper, silver, tin, titanium, zirconium, vanadium, chromium and manganese. Among them, however, cobalt is most desired from the standpoint of accelerating the oxidation of the bisimde compound {organic oxygen absorber (B) } and improving its oxygen absorbing capability. The catalyst of such a transition metal is, usually, used in the form of a low-valence inorganic salt, an organic salt or a complex of the transition metal. Their concrete examples have been known as closely described in, for example, JP-A-2004-161796.

In the present invention, the transition metal catalyst should be added in a small amount. Concretely, the transition metal catalyst should be added to the resin composition in an amount in a range calculated as metal of 10 to 350 ppm and, preferably, 20 to 100 ppm. If the transition metal catalyst is not added or is added but in an amount smaller than the above range, then the oxidation of the bisimide compound is not promoted and the oxygen-absorbing capability becomes low. Specifically, the oxygen-barrier property becomes insufficient in the field of packaging containers. If the transition metal catalyst is added in an amount larger than the above range, it becomes difficult to effectively suppress the yellowing caused by the absorption of oxygen. Presumably, this is due to that low-molecular components such as aldehyde and the like are much generated by the oxidation giving rise to the yellowing.

Other blending agents;
The oxygen-absorbing resin composition of the invention containing the above-mentioned components (A) to (C) as essential components can be, further, blended with various blending agents such as filler, coloring agent, heat stabilizer, aging stabilizer, antioxidant, antiaging agent, photo stabilizer, ultraviolet ray absorber, antistatic agent, lubricant like metal soap or wax, reforming resin and rubber in suitable amounts in a range in which they do not impair the capability for suppressing the yellowing, oxygen-absorbing capability or formability.

### <Preparation of the oxygen-absorbing resin composition and its use>

The oxygen-absorbing resin composition of the invention described above is, usually, prepared by kneading the above-mentioned components in a non-oxidizing atmosphere by using an extruder, and the like. It is, however, also allowable to employ such means as mixing some of the components in advance and, thereafter, adding the rest of the components thereto.

For example, part of the thermoplastic base resin (A), the oxygen absorber (B) and the other blending agent to be suitably added are melt-kneaded together by using a twin screw extruder while conducting the deaeration to prepare a master batch thereof in the form of pellets. Just prior to the use, the rest of the thermoplastic base resin (A) is kneaded together therewith, and the mixture is put into the forming. In this case, the properties may not be the same between the thermoplastic resin used for preparing the master batch and the thermoplastic resin that is kneaded subsequently. Employment of the above means makes it possible to adjust the properties so as to meet the use.

As for the transition metal catalyst (C), further, it is desired that the transition metal catalyst (C) is homogeneously blended. For this purpose, the transition metal catalyst is dissolved in a suitable organic solvent (e.g., organic solvent of the type of alcohol, ether, ketone, hydrocarbon, etc.). The thus obtained solution is then mixed with other components in a kneader such as extruder.

The oxygen-absorbing resin composition of the present invention not only exhibits oxygen-absorbing capability to such a degree that is sufficient for maintaining gas-barrier property required in the field of the packaging containers but also effectively suppresses the yellowing caused by the absorption of oxygen. Therefore, the oxygen-absorbing resin composition of the invention is very useful, specifically, in the field of use where transparency is required.

Further, even when a polyester resin such as PET having a high process temperature is used as the base resin, excellent oxygen-absorbing capability (property to be oxidized) of the bisimide compound that is used as the organic oxygen absorber is not impaired. Therefore, the resin composition of the present invention, usually, uses the polyester such as PET. Accordingly, the resin composition of the invention is, most desirably, used in the field of packaging materials that require transparency.

In absorbing oxygen, further, the resin composition of the invention is not accompanied by the by-production of low-molecular decomposed product that could cause offensive odor. Even from the standpoint of preventing the content from being deteriorated by oxidation and preventing the flavor from being deteriorated, therefore, the resin composition of the present invention is very suited for use in the field of packaging materials.

Accordingly, the oxygen-absorbing resin composition of the present invention is preferably used as a packaging material in the forms of, for example, film, sheet, cup, tray, bottle, tube, lid, and the like. The oxygen-absorbing resin composition can be, further, used in the form of powder, film, sheet, and the like in order to absorb oxygen in the sealed packaging containers.

In absorbing oxygen, further, the oxygen-absorbing resin composition of the invention is not accompanied by the by-production of low-molecular decomposed product that could cause offensive odor. In forming packaging containers such as bag, cup, bottle, tube and the like, therefore, the layer comprising the resin composition may be located on a side that comes in contact with the content in the container. Therefore, the packaging containers can be formed by using only the layer that comprises the oxygen-absorbing resin composition.

By utilizing the oxygen-barrier property of the above resin composition based on its excellent oxygen-absorbing capability, the packaging container of the single-layer structure makes it possible to decrease the thickness of the container wall and, therefore, to reduce the weight of the container, to save resources and to lower the cost.

The packaging containers can be formed by any known means. For example, the resin composition can be extrusion-molded into a film which is then stuck together by heat-sealing to form a bag-like container. Through the extrusion molding or injection molding, further, a preform is formed in the shape of a sheet or a test tube, and is formed into a packaging container in the form of cup, tray, bottle, and the like through the secondary forming such as vacuum molding, stretch molding, compressed air molding, plug assist molding or stretch-blow molding. Moreover, the packaging container in the shape of a tube can be also directly molded through the extrusion molding, injection molding, extrusion blow molding, and the like.

Since the bisimide compound used as the organic oxygen absorber has excellent heat resistance, it is most desired to form stretch-molded container by using the polyester as the base resin and, further, to form a heat-resistant bottle having improved heat resistance through the heat-setting.

It is, further, allowable to obtain a packaging container of a multi-layer structure by using the oxygen-absorbing resin composition of the present invention in combination with other resins or resin compositions. By increasing the number of the layers, it is made possible to further improve barrier property against oxygen, to improve barrier property against gases (e.g. , carbonic acid gas and water vapor) other than oxygen and, further, to sustain the oxygen-absorbing capability for extended periods of time.

Described below are examples of the multilayer structure. Here, the layer constitutions are abbreviated as described below.
- OAR:: Oxygen-absorbing layer formed by using the oxygen-absorbing resin composition of the present invention.
- PET:: Polyethylene terephthalate layer.
- PE:: Layer of a low-, intermediate- or high-density polyethylene, straight chain low-density polyethylene or linear very-low-density polyethylene.
- PP:: Polypropylene layer.
- COC:: Cyclic olefin resin layer.
- GBAR:: Gas-barrier layer of aromatic polyamide or ethylenevinyl alcohol copolymer.

Two-layer structure;
   PET/OAR
Three-layer structures;
   PE/OAR/PET
   PET/OAR/PET
   GBAR/OAR/PET
   PE/OAR/COC
Four-layer structures;
   PE/PET/OAR/PET
   PE/OAR/GBAR/PET
   PET/OAR/GBAR/PET
   PE/OAR/GBAR/COC
   PE/OAR/GBAR/PE
Five-layer structures;
   PET/OAR/PET/OAR/PET
   PE/PET/OAR/GBAR/PET
   PET/OAR/GBAR/COC/PET
   PET/OAR/PET/COC/PET
   PE/OAR/GBAR/COC/PET
   PE/GBAR/OAR/GBAR/PE
   PP/GBAR/OAR/GBAR/PP
Six-layer structures;
   PET/OAR/PET/OAR/GBAR/PET
   PE/PET/OAR/COC/GBAR/PET
   PET/OAR/GBAR/PET/COC/PET
   PE/GBAR/OAR/PE/GBAR/PE
   PP/GBAR/OAR/PP/GBAR/PP
Seven-layer structure;
   PET/OAR/COC/PET/GBAR/OAR/PET

In the above multilayer structures, an embodiment that includes the gas-barrier resin layer (GBAR) is desired from the standpoint of sustaining the oxygen-absorbing capability of the oxygen-absorbing layer (OAR) for extended periods of time.

Either side of the above multilayered structures may be formed on the inner surface side or the outer surface side of the container.

If the adhesiveness is not sufficient among the layers, then layers of an adhesive resin such as olefin resin modified with an unsaturated carboxylic acid may be interposed among them. Here, the oxygen-absorbing layer (OAR) of an oxygen-absorbing resin composition using the polyester as the thermoplastic base resin exhibits excellent adhesiveness to the PET layer and can, therefore, be laminated on the PET layer without interposing any particular adhesive resin layer.

By utilizing the technique of forming multilayer structure based on the co-extrusion or the co-injection, the packaging container of the multilayer structure is formed in the same manner as that of forming the containers of the single-layer structure.

The packaging container including the layer of the oxygen-absorbing resin composition of the invention exhibits excellent oxygen-barrier property owing to its excellent oxygen-absorbing capability. Either when it is formed in a single-layer structure or in a multilayer structure, therefore, the packaging container of the invention can be very favorably used for containing a variety of kinds of contents that tend to be deteriorated in the presence of oxygen, such as beverages like beer, wine, fruit juice, carbonated soft drinks, as well as fruits, nuts, vegetables, meat products, infant foods, coffee, jam, mayonnaise, ketchup, edible oils, dressings, sauces, food boiled down in soy, milk products, medicines, cosmetics, gasoline and the like.

Owing to its excellent transparency, further, the packaging container of the invention can be favorably used in a field where transparency is required.

### EXAMPLES

The invention will be, further, described by way of Examples to which only, however, the invention is in no way limited. The materials and testing methods used in Examples and Comparative Examples were as described below.

### 1. Materials.

### <Polyester resin (A)>

Isophthalic acid (copolymerization ratio = 1.8 mol%) copolymerized polyethylene terephthalate resin (5015w: manufactured by Shinkong Synthetic Fibers Corp., IV = 0.83).

### <Oxygen-absorbing starting material (BX)>

As a starting material (acid anhydride) for an oxygen-absorbing component, there was used a mixture of methyltetrahydrophthalic acid anhydrides (HN-2200, manufactured by Hitachi Chemical Co., Ltd.) containing 45% by weight of a 4-methyl-Δ3-tetraydrophthalic acid anhydride and 21% by weight of a cis-3-methyl-Δ4- tetrahydrophthalic acid anhydride.

### <Oxygen-absorbing starting material (BY)>

A cis-4-cyclohexene-1,2-dicarboxylic acid anhydride (manufactured by Tokyo Chemical Industry Co., Ltd.) was used as a starting material (acid anhydride) for the oxygen-absorbing component.

### <Transition metal catalyst (C)>

Cobalt neodecanoate (DICNATE 5000, manufactured by
DIC Corporation)

### 2. Synthesis of the oxygen-absorbing component.

### (Synthesis Example 1)

250 Grams of BX was fed as an oxygen-absorbing starting material (acid anhydride) into a 1000-mL four neck separable flask equipped with a stirrer, a nitrogen introduction pipe and a dropping funnel. Further, an amine component dissolved in 200 mL of ethanol, and 87.1 g of a hexamethylenediamine (manufactured by Tokyo Chemical Industry Co., Ltd.) were gradually added thereto. After they have been all thrown in, the reaction was carried out in a nitrogen atmosphere at 120 to 180°C for about 5 hours while removing water that was formed, and an oxygen-absorbing component B1 was obtained.

### (Synthesis Example 2)

A compound B2 was obtained by conducting the synthesis in the same manner as in Synthesis Example 1 but using 250 g of BX, 101 g of metaxylenediamine and 200 mL of ethanol.

### (Synthesis Example 3)

200 Grams of BY, 75 g of hexamethylenediamine, 50 mL of toluene (manufactured by Wako Pure Chemical Industries, Ltd.) and 150 mL of N-methylpyrrolidone (NMP) (manufactured by Wako Pure Chemical Industries, Ltd.) were fed into a 1000-mL separable flask equipped with a stirrer, a nitrogen introduction pipe and a Dean-Stark type water separator, and were reacted together in a nitrogen atmosphere at 140°C for about 4 hours while removing water that was formed. To the reaction solution, there was added 500 mL of 2-propanol, and the obtained slurry was filtered by suction followed by washing with 100 mL of 2-propanol. Thereafter, the slurry was dried in vacuum at 40°C for 12 hours to obtain a compound B3.

### (Synthesis Example 4)

A compound B4 was obtained by conducting the synthesis in the same manner as in Synthesis Example 3 but using 200 g of BY, 80 g of metaxylenediamine, 50 mL of toluene and 150 mL of NMP.

### 3. Oxygen-absorbing resin pellets.

By using a twin screw extruder equipped with a granulating facility {TEM-35B, manufactured by TOSHIBA MACHINE CO., LTD.} with its barrel being heated at a temperature of 280°C, the polyester resin A was mixed and kneaded with various kinds of constituent components, and the mixture hereof was extruded in a stranded form to obtain resin composition pellets.

As for introducing the constituent components, the components in the form of solid pellets were fed by using a powder feeder and the components in the form of a liquid were fed by using a liquid feeder (MOHNO PUMP, manufactured by HEISHIN Ltd.) through an opening in the extruder such that the amounts thereof was 10% by weight.

### 4. Measuring·Evaluating Methods.

### (1) Concentration of dissolved oxygen.

Oxygen-free water having almost zero oxygen concentration was produced by using an oxygen-free water producing apparatus (LOW DISSOLVED OXYGEN, manufactured by MIURA CO. , LTD.). A bottle that was formed was filled with this water to its full capacity and was sealed with a plastic cap. After the bottle was stored in an air-conditioned room maintained at 23°C50%RH for 2 months, the concentration of oxygen dissolved in water in the bottle was measured by using an instrument for measuring the concentration of oxygen dissolved in water (Oxygen Indicator, manufactured by Orbisphere Laboratories).

### (2) Measuring the b*-value in the bottle body portion.

Body portion was cut out from the bottle right after it was formed and from the bottle after the concentration of oxygen dissolved in water therein has been measured. The body portions were measured for their b*-values by using a color computer {SM-4, manufactured by Suga Test Instruments Co.,Ltd.}.

### (Examples 1 and 2, and Comparative Examples 1 to 3)

The polyester resins, oxygen-absorbing resin pellets and transition metal catalyst described above were dry-blended and were thrown into a hopper of a molding machine to obtain, by the injection molding, single-layer preforms for molding bottles each weighing 24 g. Thereafter, the formed preforms were biaxially stretch-blow molded into 500-mL bottles.

Table 1 shows the weight ratios of the materials that were used, concentrations of oxygen dissolved in water and b*-values.

**Table 1**

| | Oxygen-absorbing polyester resin composition | | | Evaluated results | | |
|---|---|---|---|---|---|---|
| | Polyester resin (wt%) | Oxygen-absorbing component (wt%) | Transition metal catalyst (ppm as metal) | Concentration of dissolved oxygen (ppm) | b*-value | |
| | | | | | Just after formed | After 2 months at 23°C |
| Example 1 | A: 95.1 | B1: 4.9 | 70 | 0.064 | 1.36 | - |
| Example 2 | A: 97.0 | B3: 3.0 | 70 | 0.631 | 1.05 | 1.32 |
| Comp. Ex. 1 | A: 100 | | - | 4.480 | 0.60 | 0.60 |
| Comp. Ex. 2 | A: 95.6 | B2: 4.4 | 70 | 0.060 | 1.83 | - |
| Comp. Ex. 3 | A: 97.0 | B4: 3.0 | 70 | 0.807 | 2.12 | 2.51 |

## Claims

1. An oxygen-absorbing resin composition containing:
(A) a base material which comprises a thermoplastic resin;
(B) a bisimide compound derived from an acid anhydride represented by the following formula (1), 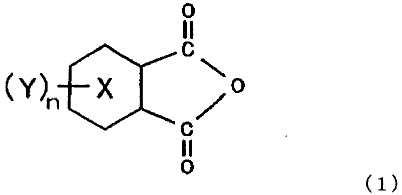 wherein, a ring X is an aliphatic ring having an unsaturated bond, n is a number of substituents Y bonded to said ring X and is an integer of 0 or 1, and Y is an alkyl group,
and an aliphatic diamine; and
(C) a transition metal catalyst;
wherein said bisimide compound (B) is contained in amounts of 0.1 to 10.0% by weight, and said transition metal catalyst (C) is contained in amounts of 10 to 350 ppm calculated as metal.

2. The oxygen-absorbing resin composition according to claim 1, wherein said bisimide compound (B) is contained in amounts of 1.0 to 5.0% by weight, and said transition metal catalyst (C) is contained in amounts of 20 to 100 ppm calculated as metal.

3. The oxygen-absorbing resin composition according to claim 1, wherein said aliphatic diamine has a non-cyclic structure.

4. A packaging container having a layer that contains the oxygen-absorbing resin composition of claim 1.
